Europäisches Patentamt

European Patent Office

Office européen des brevets

(11) Veröffentlichungsnummer: **0 476 794 A1**

# EUROPÄISCHE PATENTANMELDUNG

(21) Anmeldenummer: **91250238.2**

(22) Anmeldetag: **28.08.91**

(51) Int. Cl.⁵: **F16H 47/04**

(30) Priorität: **20.09.90 DE 4030050**

(43) Veröffentlichungstag der Anmeldung:
**25.03.92 Patentblatt 92/13**

(84) Benannte Vertragsstaaten:
**DE FR IT**

(71) Anmelder: **MANNESMANN Aktiengesellschaft**
**Mannesmannufer 2**
**W-4000 Düsseldorf 1(DE)**

(72) Erfinder: **Berger, Günter, Dr.-Ing.**
**Iltisweg 6**
**W-4350 Recklinghausen(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) **Hydrostatisch mechanisches Lastschaltgetriebe.**

(57) Die Erfindung betrifft ein hydrostatisch mechanisches Lastschaltgetriebe mit einem mehrwelligen Planetengetriebe, einer eingangsseitig angeordneten volumenverstellbaren Verdrängermaschine, die mit einer volumenkonstanten Verdrängermaschine hydraulisch verbunden ist, sowie Zahnrad-Nachschaltstufen, Schaltkupplungen, Antriebs- und Abtriebswelle. Um ein hydrostatisch mechanisches Lastschaltgetriebe zu schaffen, das in kompakter Bauweise eine geringe Anzahl von Bauteilen erfordert und betriebssicher ein stufenloses ruckfreies hydrostatisches Anfahren in beiden Fahrtrichtungen von Null heraus zu ermöglichen, wird vorgeschlagen, daß die volumenkonstante Verdrängermaschine (12) ein Zahnrad (14) aufweist, das zum einen über ein Zahnrad (71) und eine durch eine Kupplung (87) trennbare Anfahrwelle (73) mit dem Abtrieb (50) verbindbar ist und das andererseits über ein Zahnrad (15), das über eine Hohlwelle (21) und damit verbundenem Sonnenrad (22) an Überlagerungsgetriebe angeschlossen ist.

Fig. 2

Die Vorwärtsfahrbereiche werden durch Kupplung 88,
die Rückwärtsfahrbereiche durch Kupplung 84 aktiviert

Schalttabelle

| Fahrbereich \ Kupplung | 81 | 82 | 83 | 87 | 35 | 36 | 37 | 38 | 39 |
|---|---|---|---|---|---|---|---|---|---|
| Anfahren | | ● | | ● | ● | | | | ● |
| 1 | | ● | ● | | ● | | | | ● |
| 2 | | ● | | ● | | ● | | | ● |
| 3 | | ● | | ● | | | ● | | ● |
| 4 | | ● | | ● | | ● | | | ● |
| 5 | | ● | | ● | | | | ● | |
| 6 | | | ● | ● | | | | ● | |

Die Erfindung betrifft ein hydrostatisch mechanisches Lastschaltgetriebe mit einem mehrwelligen Planetengetriebe, einer eingangsseitig angeordneten volumenverstellbaren Verdrängermaschine, die mit einer volumenkonstanten Verdrängermaschine hydraulisch verbunden ist, sowie Zahnradnachschaltstufen, Schaltkupplungen und Antriebs- und Abtriebswelle.

Hydrostatisch mechanische Lastschaltgetriebe eignen sich in besonderer Weise für Kraftfahrzeuge, da sie die Möglichkeit bieten, die Verbrennungsmaschine entlang bevorzugter Regelkennlinien zu betreiben. So ist der Betrieb entlang der Kennlinie des minimalen Kraftstoffverbrauchs und entlang der idealen Zugkrafthyperbel möglich. Für den Fahrer eines Kraftfahrzeuges bringen diese Getriebe eine deutliche Entlastung durch den Wegfall der bei Handschaltgetriebe erforderlichen Schalttätigkeit und Kupplungsbedienung.

Aus der DE-OS 38 15 780 ist ein hydrostatisch mechanisches Lastschaltgetriebe bekannt, bei dem eine volumenveränderbare Verdrängermaschine mit der Antriebswelle verbunden und eine volumenkonstante Verdrängermaschine über eine Kupplung mit der Abtriebswelle verbindbar ist. Dieses aufwendige und bezogen auf das erreichbare Übersetzungsverhältnis mit einer Vielzahl von Bauelementen versehene Getriebe erlaubt nicht das volle Reversieren über den gesamten Übersetzungsbereich.

Ein weiterer Nachteil des bekannten Getriebes ist die koaxiale Anordnung von zwei Hohlwellen und einer Vollwelle sowohl hinsichtlich der Lebensdauer, der Instandhaltungsfreundlichkeit sowie des erforderlichen Bauvolumens des Getriebes. Darüber hinaus ist die größtmögliche konstruktiv auszubildende Übersetzung begrenzt durch das Anordnen eines Losrades auf der Hohlradwelle.

Aus der DE-OS 39 10 410 ist ein hydrostatisch mechanisches Leistungsverzweigungsgetriebe bekannt, bei dem neben einem Schaltgetriebe und zwei Planetensätzen zweier Kuppelgetriebe ein drittes Kuppelgetriebe vorgesehen ist. Um auch im Anfahrbereich mit der Maximalleistung der Brennkraftmaschine arbeiten zu können, hat das Getriebe einen extrem großen Übersetzungbereich. Bei einer Vielzahl von Land- und Baumaschinen wird der Übersetzungsbereich aber begrenzt durch die übertragbare Zugkraft an den Rädern des Fahrzeugs. Da bei diesen Maschinen bei kleinen Geschwindigkeiten auch nur relativ niedrige Antriebsleistungen benötigt werden, spielt der Wirkungsgrad nur eine untergeordnete Rolle.

Durch die Vielzahl der Lamellenkupplungen entstehen in den einzelnen Fahrbereichen in nachteiliger Weise hohe Schleppmomentverluste bedingt durch geöffnete Lamellenkupplungen mit hohen Relativdrehzahlen. Ferner befinden sich vier Lamellenkupplungen zwischen drehenden Teilen, was konstruktiv zu einer aufwendigen Lösung für die Drucköversorgung führt.

Durch das nachgeschaltete Reversierplanetengetriebe ergeben sich für den Vorwärts- und Rückwärtsfahrbereich unterschiedliche maximale Übersetzungen. Gerade bei Land- und Baumaschinen ist dies unerwünscht.

Ebenso ist es von Nachteil, das Reversiergetriebe für die bereits von den vorgeschalteten Gängen aufgebauten Drehmomente auszulegen, was zu einem großen Planetensatz führt.

Das mit einer Vielzahl verschleißanfälliger Kupplungen versehene Getriebe ermöglicht nur eine Verbesserung des Wirkungsgrades im Anfahrbereich, ein Betriebszustand, der bei Kraftfahrzeugen, insbesondere bei Land- und Baumaschinen, bezogen auf die gesamte Betriebsmittelnutzungszeit nur einen geringen Anteil ausmacht.

Aufgabe der Erfindung ist es, ein hydrostatisch mechanisches Lastschaltgetriebe zu schaffen, das in kompakter Bauweise eine geringe Anzahl von Bauteilen erfordert und betriebsicher ein stufenloses ruckfreies hydrostatisches Anfahren in beiden Fahrtrichtungen von Null heraus ermöglicht.

Die Erfindung löst die Aufgabe durch die im kennzeichnenden Teil des Anspruchs 1 aufgezeigten Merkmale.

Das erfindungsgemäße Getriebe weist durch die antriebsseitige Anordnung der Verdrängermaschinen und den Einsatz von zwei ineinandergreifenden Überlagerungsgetrieben eine kompakte Bauweise auf. Die zum Einsatz kommenden Überlagerungsgetriebe sind dabei so angeordnet, daß ein Teil der Bauteile gemeinsam genutzt werden kann mit dem Vorteil der Minderung der Anzahl der Getriebeelemente.

Durch die einkuppelbare Verbindung des Hydroantriebs mit der Abtriebswelle besteht die Möglichkeit des hydrostatischen Anfahrens in beiden Fahrtrichtungen im untersten Geschwindigkeitsbereich von Null an. Hierzu wird die im Bereich der Verdrängermaschine angeordnete Kupplung geschlossen. Sobald sich das Fahrzeug in Bewegung gesetzt hat, wird bei synchroner Drehzahl unter Last auf den leistungsverzweigten Betrieb umgeschaltet. Eine Behinderung des Normalbetriebes durch für das hydrostatische Anfahren erforderliche Element liegt nicht vor.

Bei dem erfindungsgemäßen Getriebe sind die Überlagerungs- und das Schaltgetriebe so miteinander kuppelbar, daß bei den höheren Schaltstufen eine möglichst geringe Anzahl von Bauelementen zum Einsatz kommt. Erreicht wird dies durch die konzentrische Anordnung der miteinander kuppelbaren Abtriebswellen beider Überlagerungsgetriebe und das unmittelbare Ankuppeln der Ausgangswelle an die koaxial angeordnete Abtriebswelle.

Weiterhin ermöglicht die gewählte Anordnung von drei Kupplungen zwischen den Abtrieben der beiden Überlagerungsgetriebe und zwei Abtriebswellen des hydrostatisch mechanischen Getriebes beliebige Wellen miteinander zu verbinden. Es sind bei den vier kuppelbaren Schaltmöglichkeiten jeweils immer zwei Kupplungen geschaltet, wobei die geöffnete Kupplung immer nur mit geringer Relativdrehzahl läuft, was zu niedrigen Leerlaufverlusten führt. Durch die Wahl von Reibelementkupplungen können die jeweiligen Abtriebswellen in beliebiger Reihenfolge miteinander gekuppelt werden.

Die Überlagerungsgetriebe sind in besonders vorteilhafter Weise ausgangsseitig durch eine Kupplung unmittelbar verbindbar und durch jeweils eine vorgeschaltete Kupplung ein- bzw. auskuppelbar. Auf einfache und sichere Weise finden sich in den einzelnen Schaltstufen jeweils zwei der drei Kupplungen im Eingriff.

Dem hydrostatisch mechanischen Lastschaltgetriebe ist ein Wendegetriebe vorgeschaltet. Mit dieser Anordnung ist ein Reversierbetrieb über den gesamten Geschwindigkeitsbereich möglich. Das Wendegetriebe ist als Planetengetriebe ausgebildet und weist leicht schaltbare und betriebssichere Kupplungen auf.

Durch das Vorschalten des Wendegetriebes ist dieses konstruktiv nur für das maximale Drehmoment der Brennkraftmaschine auszulegen. Im Vorwärtsfahrbereich sind zwei Wellen des Planetenwendegetriebes miteinander gekuppelt, so daß keine Abwälzverluste entstehen und das Getriebe damit als reine Kupplung wirkt.

Dem Überlagerungsgetriebe ist ein Schaltgetriebe nachgeordnet. Zum Schalten der Zahnradnachschaltstufen sind betriebssichere und leicht schaltbare Zahnkupplungen vorgesehen, die im geöffneten Zustand keine Schleppmomente erzeugen.

Die Abtriebswelle ist koaxial zur Antriebswelle angeordnet mit dem Vorteil des direkten Durchtriebes in den beiden letzten Fahrstufen, wodurch sich sehr hohe Gesamtwirkungsgrade ergeben.

Für eine weitere Spreizung des Übersetzungsverhältnisses ist ein Getriebe mit zwei weiteren Nachschaltstufen (beispielsweise normal und langsam) angeschlossen. Bei einem Ausführungsbeispiel für ein hydrostatisch mechanisches Lastschaltgetriebe lassen sich stufenlos Geschwindigkeiten von 0,8 bis 40 km/h realisieren, und zwar stufenlos sowohl für die Vorwärts- wie die Rückwärtsfahrt.

Beispiele der Erfindung sind in den beiliegenden Zeichnungen aufgeführt. Es zeigen:

Fig. 1   ein Lastschaltgetriebe mit vier Fahrbereichen einschließlich Schalttabelle,

Fig. 2   ein Lastschaltgetriebe mit Wendegetriebe für 2 x 6 Fahrbereiche einschließlich Schalttabelle und

Fig. 3   ein Lastschaltgetriebe mit Wendegetriebe für 2 x 10 Fahrbereiche einschließlich Schalttabelle.

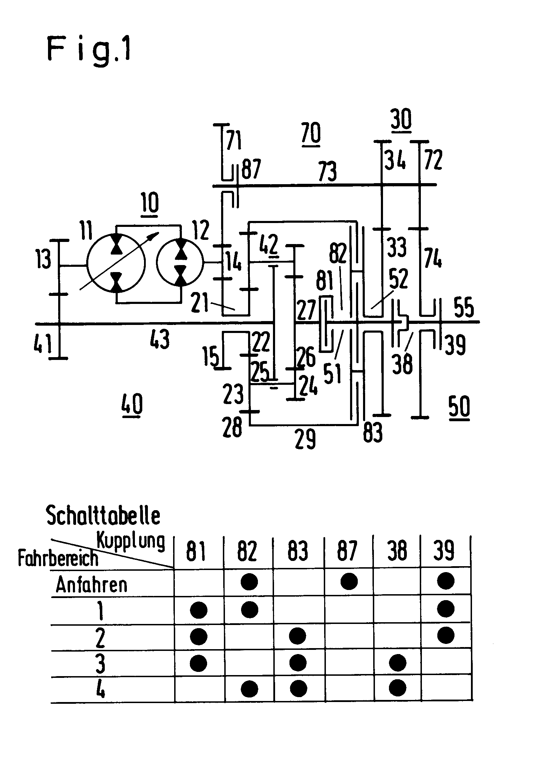

Die Figur 1 zeigt ein hydrostatisches Getriebe 10 mit einer volumenverstellbaren Verdrängermaschine 11, die ein Antriebszahnrad 13 aufweist und die hydraulisch verbunden ist mit einer volumenkonstanten Verdrängermaschine 12, die ein Antriebszahnrad 14 aufweist. Die Antriebswelle 43 treibt über ein Zahnrad 41 das Zahnrad 13 an. Das Zahnrad 14 kämmt mit einem Zahnrad 71 und gleichzeitig einem Sonnenrad 15, das die der Antriebswelle 43 konzentrisch umgebende Hohlwelle 21 antreibt.

Die Hohlwelle 21 und die Antriebswelle 43 bilden die Antriebe für die Überlagerungsgetriebe. Dabei weist das eine Überlagerungsgetriebe den mit der Antriebswelle 43 kopfseitig angeordneten Steg 42 auf, der mit der Planetenwelle 25 verbunden ist, die beidendig Planetenräder 23 und 24 aufweisen. Die Planetenräder 23 sind dabei mit einem Sonnenrad 22 verbunden, das an der Hohlwelle 21 befestigt ist. Die Planetenräder 24 kämmen mit einem Sonnenrad 26, das kopfendig an einer Abtriebswelle 27 angeordnet ist.

Das andere Überlagerungsgetriebe weist zum Teil Bauelemente auf, die mit denen des einen Überlagerungsgetriebes identisch sind, und zwar das Sonnenrad 22, die Planetenwelle 25 mit dem Planetenrad 23, sowie den mit der Planetenwelle 25 verbundenen Steg 42. Mit dem Planetenrad 23 kämmt ein Hohlrad 28, das mit einer Abtriebshohlwelle 29 verbunden ist.

Die Abtriebswelle 27 des einen Überlagerungsgetriebes ist über eine Kupplung 81 mit einer Abtriebswelle 51 verbindbar. Die Abtriebshohlwelle 29 des zweiten Überlagerungsgetriebes ist über eine Kupplung 83 mit einer Abtriebshohlwelle 52 verbindbar. Die Abtriebswelle 51 und die Abtriebshohlwelle 52 sind über eine Kupplung 82 kuppelbar.

Das mit dem Antriebszahnrad 14 kämmende Zahnrad 71 einer Anfahrteinrichtung 70 weist eine Kupplung 87 auf. Die Kupplung 87 ist an einer Anfahrtwelle 73 angeordnet, die fußendig ein Zahnrad 72 aufweist, das mit einem Zahnrad 74 kämmt. Das Zahnrad 74 weist eine Kupplung 39 auf, die mit der Ausgangswelle 55 kuppelbar ist. An der Ausgangswelle 55 des Abtriebes 50 ist eine Kupplung 38 angeordnet, die mit der Abtriebswelle 51 kuppelbar ist. Weiterhin ist eine Kupplung 37 zum Verbinden der Abtriebswelle 51 mit der Abtriebshohlwelle 52 vorgesehen.

An der Anfahrtwelle 73 ist ein Zahnrad 32 einer Zahnradnachschaltstufe 30 vorgesehen. Das Zahnrad 34 kämmt mit einem Zahnrad 33, das konzentrisch zur Abtriebswelle 51 vorgesehen ist.

Die Schalttabelle zeigt die vier Schaltstufen. Erkennbar ist die jeweilige Verknüpfung von zwei der drei Kupplungen 81, 82, 83 sowie die Schaltung der Kupplungen 38, 39 und 87.

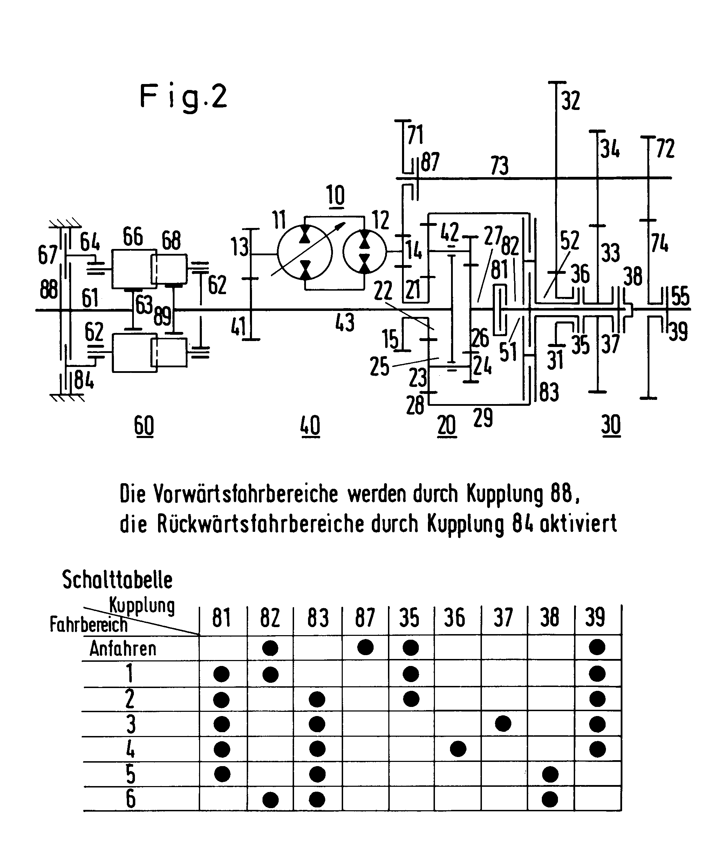

Die Figur 2 zeigt über das Getriebe in Figur 1 hinaus, das das dargestellte Getriebe ein an der Fahrwelle 73 angeordnete Zahnrad 34 aufweist, das mit einem konzentrisch zur Abtriebswelle 51 angeordneten Zahnrad 33 kämmt. An dem Zahnrad 33 ist an einer Seite eine Kupplung 36 angeordnet, die mit der Abtriebshohlwelle 52 kuppelbar ist. An der anderen Seite des Zahnrades 33 ist die Kupplung 37 angeordnet, die mit der Abtriebswelle 51 kuppelbar ist. Dem Antrieb 40 ist ein Wendegetriebe 60 vorgeschaltet, das als Planetengetriebe ausgebildet ist. Das Wendegetriebe 60 weist dabei eine koaxial zur Antriebswelle 43 angeordnete Antriebswelle 61 auf, an der kopfendig eine Kupplung 88 für den Vorwärtsantrieb angeordnet ist, fußendig ein Sonnenrad 63 und zwischen dem Sonnenrad 63 und der Kupplung 88 ein Steg 62 aufweist. Am Steg 62 sind Planetenwellen 65 angeordnet, an denen mit dem Sonnenrad 63 kämmende Planetenräder 66 vorgesehen sind. Der Steg 62 ist als Hohlwelle 64 ausgebildet, dessen kopfendiger Teil 67 mit der Kupplung 88 für den Vorwärtstrieb und einer Kupplung 84 für den Rückwärtsbetrieb kuppelbar ist.

Die Planetenräder 66 kämmen mit den Planetenrädern 68, die in dem Steg 65 gelagert sind und mit einem Sonnenrad 69 kämmen, wobei das Sonnenrad 69 an der Antriebswelle 43 befestigt ist.

Dir zugehörige Schalttabelle zeigt die stufenlose Leistungsübertragung von je sechs Fahrbereichen vorwärts und entsprechend sechs Fahrbereichen rückwärts.

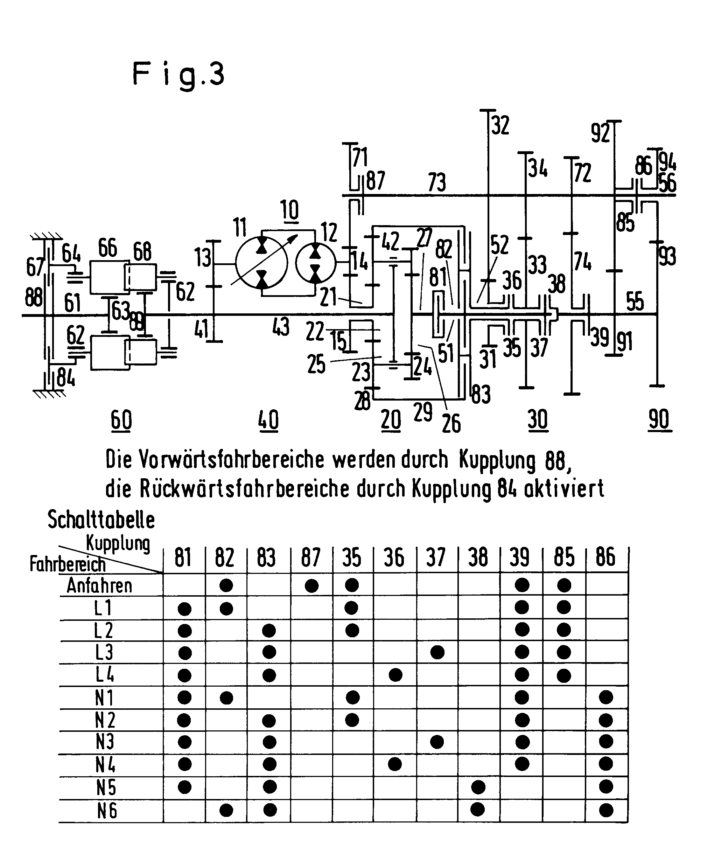

Die Figur 3 zeigt ein stufenlos wirkendes hydrostatisch mechanisches Lastschaltgetriebe, das über das in der Figur 2 dargestellte Getriebe hinaus einen Fahrbereich low und normal aufweist. Hierzu sind an der Ausgangswelle 55 Zahnräder 91 und 93 vorgesehen, wobei das Zahnrad 91 mit einem Zahnrad 92 und das Zahnrad 93 mit Zahnrad 94 kämmt. Die Zahnräder 92 und 94 sind konzentrisch zu einer Abtriebswelle 56 angeordnet und über Umschaltkupplungen 85 und 86 mit dieser kuppelbar.

Die zugehörige Fahrbereichstabelle zeigt vier Schaltmöglichkeiten für den Fahrbereich low und sechs Schaltmöglichkeiten für den Fahrbereich normal. Diese zehn Fahrbereiche sind vorwärts wie rückwärts darstellbar.

**Patentansprüche**

1. Hydrostatisch mechanisches Lastschaltgetriebe mit einem mehrwelligen Planetengetriebe, einer eingangsseitig angeordneten volumenverstellbaren Verdrängermaschine, die mit einer volumenkonstanten Verdrängermaschine hydraulisch verbunden ist, sowie Zahnrad-Nachschaltstufen, Schaltkupplungen, Antriebs- und Abtriebswelle,
dadurch gekennzeichnet,

   a) daß die volumenkonstante Verdrängermaschine (12) ein Zahnrad (14) aufweist, das zum einen über ein Zahnrad (71) und eine durch eine Kupplung (87) trennbare Anfahrwelle (73) mit dem Abtrieb (50) verbindbar und das zum anderen über ein Zahnrad (15) über eine eine Hohlwelle (21) und mit dieser verbundenem Sonnenrad (22) an Überlagerungsgetriebe (A, B) anschließbar ist,

   b) daß die volumenverstellbare Verdrängermaschine (11) über Zahnräder (13, 41) an die mit den Überlagerungsgetrieben (A und B) in Verbindung stehende Antriebswelle (43) angeschlossen ist und das Sonnenrad (22) und der an die Antriebswelle (43) angeschlossene Steg (42) gemeinsam den Eingang der Überlagerungsgetriebe (A, B) bilden,

   c) daß die Überlagerungsgetriebe (A, B) über Kupplungen (81 bis 83), von denen jeweils zwei Kupplungen (81 und 82, 81 und 83, 82 und 83) gleichzeitig geschlossen sind, mit den koaxial angeordneten Abtriebswellen (51, 52) kuppelbar sind, und

   d) daß ein kopfendig an der Abtriebswelle (52) vorgesehenes Zahnrad (33) mit einem Zahnrad (34) kämmt, das an der Anfahrwelle (73) angeordnet ist und über Zahnräder (72, 74) mit einer Ausgangswelle (55) verbindbar ist.

2. Lastschaltgetriebe nach Anspruch 1,
dadurch gekennzeichnet,
daß die Ausgangswelle (55) zum direkten Durchtrieb in den oberen Gängen über die Kupplung (38) mit der Abtriebswelle (51) wahlweise über die Kupplung (81) und gleichzeitiger Schaltung der Kupplung (83) mit der Abtriebswelle (27) oder über die Kupplungen (82, 83) mit den Antriebshohlwellen (52, 29) verbindbar ist.

3. Lastschaltgetriebe nach den Ansprüchen 1 oder 2,
dadurch gekennzeichnet,
daß der Antriebswelle (43) ein Wendegetriebe (60) vorgeschaltet ist.

4. Lastschaltgetriebe nach Anspruch 3,
dadurch gekennzeichnet,
daß das Wendegetriebe (60) ein Planetengetriebe ist, das zum Reversieren eine Doppelkupplung (84, 88) aufweist,

**5.** Lastschaltgetriebe nach Anspruch 1,
dadurch gekennzeichnet,
daß das Überlagerungsgetriebe (A) ein kopfendig an der Welle (43) angeordneten Steg (42) aufweist, an dem über die Planetenwelle (25) verbundene Planetenräder (23, 24) angeordnet sind, wobei das Zahnrad (23) mit dem Sonnenrad (22) und das Zahnrad (24) mit einem Sonnenrad (26) kämmt, welches kopfseitig an der Welle (27) angeordnet ist und über diese mit der Abtriebswelle (51) durch die Kupplungen (81) verbindbar ist.

**6.** Lastschaltgetriebe nach Anspruch 5,
dadurch gekennzeichnet,
daß das Überlagerungsgetriebe (B) neben dem Steg (42) und dem Zahnrad (23) über das Hohlrad (28), die Antriebshohlwelle (29) und die Kupplung (83) das Überlagerungsgetriebe (A) umhüllend mit der zur Antriebswelle (51) koaxial angeordneten Abtriebshohlwelle (52) verbindbar ist und durch eine Kupplung (82) mit dieser kuppelbar ist.

**7.** Lastschaltgetriebe nach Anspruch 6,
dadurch gekennzeichnet,
daß die Kupplungen (81 bis 83) Reibelementkupplungen sind.

**8.** Lastschaltgetriebe nach Anspruchen 6,
dadurch gekennzeichnet,
daß den Überlagerungsgetrieben (A, B) für verschiedene Nachschaltstufen ein Schaltgetriebe (30) axial nachgeordnet ist, das mindestens einstufig ausgebildet ist und die Zahnräder (33, 34) sowie die Kupplungen (37, 38) umfaßt.

**9.** Lastschaltgetriebe nach Anspruch 1,
dadurch gekennzeichnet,
daß an der Ausgangswelle (55) zur weiteren Spreizung ein Nachschaltgetriebe (90) angeordnet ist, das Abtriebswelle (56) aufweist.

**10.** Lastschaltgetriebe nach Anspruch 9,
dadurch gekennzeichnet,
daß das Nachschaltgetriebe (90) zweistufig ausgebildet ist und Zahnräder (91 bis 94) sowie eine Umschaltkupplung (85) besitzt, wobei zur Synchronisierung der Wellendrehzahl beim Schaltzeitpunkt das Übersetzungsverhältnis der beiden Zahnradstufen (91, 92 und 93, 94) so gewählt wird, daß es dem Quadrat der Einzelstellverhältnisse der Überlagerungsgetriebe (A, B) entspricht.

# F i g.1

**Schalttabelle**

| Fahrbereich \ Kupplung | 81 | 82 | 83 | 87 | 38 | 39 |
|---|---|---|---|---|---|---|
| Anfahren | | ● | | ● | | ● |
| 1 | ● | ● | | | | ● |
| 2 | ● | | ● | | | ● |
| 3 | ● | | ● | | ● | |
| 4 | | ● | ● | | ● | |

# Fig.2

Die Vorwärtsfahrbereiche werden durch Kupplung 88,
die Rückwärtsfahrbereiche durch Kupplung 84 aktiviert

## Schalttabelle

| Fahrbereich \ Kupplung | 81 | 82 | 83 | 87 | 35 | 36 | 37 | 38 | 39 |
|---|---|---|---|---|---|---|---|---|---|
| Anfahren | | ● | | ● | ● | | | | ● |
| 1 | ● | ● | | | ● | | | | ● |
| 2 | ● | | ● | | ● | | | | ● |
| 3 | ● | | ● | | | | ● | | ● |
| 4 | ● | | ● | | | ● | | | ● |
| 5 | ● | | ● | | | | | ● | |
| 6 | | ● | ● | | | | | ● | |

# F i g.3

Die Vorwärtsfahrbereiche werden durch Kupplung 88,
die Rückwärtsfahrbereiche durch Kupplung 84 aktiviert

Schalttabelle

| Kupplung / Fahrbereich | 81 | 82 | 83 | 87 | 35 | 36 | 37 | 38 | 39 | 85 | 86 |
|---|---|---|---|---|---|---|---|---|---|---|---|
| Anfahren | | ● | | ● | ● | | | | ● | ● | |
| L1 | ● | ● | | | ● | | | | ● | ● | |
| L2 | ● | | ● | | ● | | | | ● | ● | |
| L3 | ● | | ● | | | | ● | | ● | ● | |
| L4 | ● | | ● | | | ● | | | ● | ● | |
| N1 | ● | ● | | | ● | | | | ● | | ● |
| N2 | ● | | ● | | ● | | | | ● | | ● |
| N3 | ● | | ● | | | | ● | | ● | | ● |
| N4 | ● | | ● | | | ● | | | ● | | ● |
| N5 | ● | | ● | | | | | ● | | | ● |
| N6 | | ● | ● | | | | | ● | | | ● |

**Europäisches Patentamt**

**EUROPÄISCHER RECHERCHENBERICHT**

Nummer der Anmeldung

**EP 91 25 0238**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 192 253 (CHAUVETON, CLAUDE) <br> * Seite 4, Zeile 24 - Seite 5, Zeile 2 * * * Seite 9, Zeile 29 - Seite 10, Zeile 17 * * * Abbildungen 4,23-29 * * <br> – – – | 1 | F 16 H 47/04 |
| A | EP-A-0 306 780 (XAVER FENDT & CO.) <br> * Spalte 3, Zeile 23 - Zeile 46 * * * Abbildung 1 * * <br> – – – | 1 | |
| A | DE-C-3 903 876 (JARCHOW, PROF.DR.ING. F.) <br> * Zusammenfassung * * * Abbildung 1 * * <br> – – – – – | 1,8-10 | |

| RECHERCHIERTE SACHGEBIETE (Int. Cl.5) |
|---|
| F 16 H |

Der vorliegende Recherchenbericht wurde für alle Patentansprüche erstellt

| Recherchenort | Abschlußdatum der Recherche | Prüfer |
|---|---|---|
| Den Haag | 12 Dezember 91 | VAN PROOIJEN T. |